# EUROPEAN PATENT APPLICATION

(11) **EP 4 554 068 A1**
(43) Date of publication of application: **14.05.2025**
(21) Application number: 23208112.5
(22) Date of filing: 07.11.2023
(51) Int. Cl.: H02K 15/03, H02K 1/278, H02K 1/2786, H02K 7/18

(54) **INSTALLING MAGNET MODULES AT A ROTOR HOUSE**

(71) Applicant: Siemens Gamesa Renewable Energy A/S, 7330 Brande (DK)
(72) Inventor: The designation of the inventor has not yet been filed
(74) Representative: SGRE-Association

(57) **Abstract**

It is described a method of installing magnet modules (9) at a rotor house (4) of a rotor (10) of a permanent magnet synchronous electrical machine (1), the method comprising: determining a radial distance (r1,r2,r3) between a center point (CP) at a rotation axis (2) and a surface measurement location (s1,s2,s3) at an inner surface (5) at an axial end portion (6) of the rotor house (4) at plural circumferential positions (cp1,cp2,cp3); selecting, from plural magnet installation tracks (8_1,8_2,8_3) running in an axial direction and being spaced apart in the circumferential direction (cd), an installation track (8_1) having a determined radial distance greater than a threshold, wherein the selected installation track (8_1) is in particular attributive to a greatest radial distance (r1); inserting magnet modules (9) at the selected installation track (8_1), in particular from the axial end portion (6), along the axial direction (2); repeating at least the steps of selecting and inserting with respect to unfilled installation tracks (8_2, 8_3), until plural installation tracks are filled with magnet modules (9).

## Description

### Field of invention

The present invention relates to a method of installing magnet modules at a rotor house of a rotor of a permanent magnet synchronous electrical machine and further relates to a method of manufacturing a permanent magnet synchronous electrical machine.

### Art Background

Generators of wind turbines have a tremendous size increasing with every generation of the wind turbine. Thereby, the shape of the rotor house is more and more difficult to control. This may in particular be an issue, while permanent magnets are inserted at the rotor house.

EP2555393 A1 describes a magnet loading apparatus for loading magnet pole pieces onto a field of an electric machine, which apparatus comprises a positioning means realised to hold a magnet pole piece of a plurality of magnet pole pieces in place relative to its designated position on the field; and a transfer means realised to simultaneously transfer a plurality of magnet pole pieces from the positioning means onto the field of the electric machine.

In a conventional magnet installation method, collisions between magnets and stator segments are possible. Conventionally, as a workaround spacers and/or inflatable air cushions have been inserted between rotor house and stator segments to avoid collision or damp collision.

Thus, there may be a need for a method of installing magnet modules at a rotor house of a rotor of a permanent magnet synchronous machine and there may also be a need of a method for manufacturing a permanent magnet synchronous electrical machine, where disadvantages observed in conventional methods are mitigated, in particular collisions are reduced.

### Summary of the Invention

This need may be met by the subject matter according to the independent claims. Advantageous embodiments of the present invention are described by the dependent claims.

According to an embodiment of the present invention it is provided a method of installing magnet modules at a rotor house of a rotor of a permanent magnet synchronous electrical machine, the method comprising: determining a radial distance between a center point at a rotation axis and (a surface measurement location at) an inner surface at an axial end portion of the rotor house at plural circumferential positions; selecting, from plural magnet installation tracks running in an axial direction and being spaced apart in the circumferential direction, an installation track having a determined radial distance greater than a threshold, wherein the selected installation track (8_1) is in particular attributive to a greatest radial distance; inserting magnet modules at the selected installation track, in particular from the axial end portion, along the axial direction; repeating at least the steps of selecting and inserting with respect to unfilled installation tracks, until plural installation tracks are filled with magnet modules.

The electrical machine may be configured as a generator providing, for example three-phase, electrical AC power, or providing AC power having more than three phases.

The rotor house may substantially have a cylindrical symmetry, having a circle shape in cross-section. The rotor house may have a diameter between 5 m and 20 m for example and may have a height (or extent in the axial direction) of between 5 m and 15 m for example. Other values are possible. The completely assembled rotor may comprise the rotor house, the plural magnet modules installed at the plural installation tracks and also a stiffening ring, in particular a brake disk, mounted at the axial end of the rotor house. In particular, the rotor may be an outer rotor, i.e., a rotor rotating radially outwards from an inner stator.

The stator of the synchronous electrical machine may comprise ferromagnetic permeable laminations providing plural teeth protruding for example radially outwards (for an outer rotor) or radially inwards (for an inner rotor). Around the plural teeth of the stator, rotor windings may be wound in a distributed winding topology or a concentrated winding topology.

Each magnet module may comprise a base plate, one or more permanent magnets fixed to the base plate and a cover covering the one or more permanent magnets. The magnet modules may have, when viewed along a radial direction in a cross-section, a substantially rectangular shape.

The radial distance may correspond to a radius (or distance) from the center point to (the surface measurement location at) the inner surface of the rotor house at the axial end or at the axial end portion of the rotor house. The rotor house may for example extend in the axial direction from the axial end to another axial end being for example spaced apart in the axial direction by between 5 m and 15 m for example. The radial direction is perpendicular to the axial direction and also perpendicular to the circumferential direction. The radial distance may for example be determined for between 20 and 100 circumferential positions across a whole circumference of the rotor house.

The radial distance may in particular be determined for a surface measurement location at the inner surface at the plural locations where the installation tracks are present or arranged. In particular, the respective surface measurement location may represent a contact surface of a back face of a base plate of a magnet module. The surface measurement location at the inner surface may in particular represent at least a portion of a contact surface of a back side of a base plate of the axially last magnet module which is to be installed or inserted into the respective installation track.

In other embodiments, the last magnet module inserted or to be inserted or installed at the rotor house may slightly be radially further inwards from the inner surface for which the radial distance is determined. It may be a surface portion of the inner surface of the rotor house which is located axially closer to an axial end of the rotor house where no magnet module is to be installed in the completely filled rotor house.

The magnet installation tracks may enable insertion of the plural magnet modules along the axial direction and may also provide holding elements or holding or fixation members for finally fixing the magnet modules when at the correct axial and circumferential positions. Each one of the installation tracks may be associated with a particular circumferential position or region. The installation tracks may be present across the entire circumference of the rotor house.

The surface measurement location may be at a top (e.g. substantially circular front face) of the rotor house (e.g. when the rotor house has its axis oriented vertically); the stator may be already connected/placed with the rotor house.

The selected installation track may be among the installation tracks (referred to as large-radius-installation track(s)) having radial distance greater than the threshold. The threshold may be defined in different manners according to embodiments. E.g. the threshold may be greater than a mean value of the radial distance, and/or wherein the threshold may be greater than 0.9 of a greatest determined radial distance, and/or wherein the threshold may be defined such that less than 20% or less than 10% or less than 5% or less than 2% of the determined radial distances have a value greater than the threshold; and/or wherein the selected installation track (8_1) may be not attributive to a greatest radial distance (r1) but may be among the large-radius-installation track(s).

When the inner surface (or a surface measurement location for which the radial distance is to be measured) respectively is located within a considered installation track, directly the radial distance determined for this inner surface may be considered in order to find the greatest radial distance for the plural installation tracks. When the surface measurement location at the inner surface for which the radial distance is determined is not located within the respective installation track, the radial distance of a surface within the installation track may be estimated, for example by processing and/or interpolation and/or extrapolation from plural radial distances available for other portions of the inner surface of the rotor house which are located close to the region between or within a considered installation track.

Determining the radial distance may comprise to perform one or more measurements, in particular optical measurements, and/or performing some measurement signal or measurement data processing.

The installation track to which the greatest radial distance is attributed is still not filled with any of the magnet modules. When repeating the steps of at least selecting and inserting (and in particular also the determining step), the already filled installation tracks may not be considered for selecting the respective next installation track to which the then greatest radial distance is attributed.

The magnet modules may be inserted such that a back face of the base plate contacts the portion of the inner surface of the rotor house within the respective installation tracks. In particular, the permanent magnets potentially covered with a cover will then protrude radially inwards for an inner rotor. The magnet modules may represent predetermined individuals of magnet modules which may have previously also been measured, in particular regarding their respective heights or radial extents. One or more of the aforementioned steps of determining, selecting, inserting may be performed thereby respectively only considering the unfilled installation tracks from which the respective next installation track among the large-radius-installation track(s), in particular which has attributed the greatest radial distance, is selected.

When repeating one or more of the aforementioned steps, the step of determining a radial distance may not necessarily be performed in every cycle since it may be assumed that the respective radial distance does not change significantly after having inserted magnet modules at the selected installation track or several selected installation tracks which are selected during the repeating step.

According to an embodiment, however, determining the radial distance is performed every time an installation track (or only after two or three tracks) has been filled before the next installation track is selected.

When the magnet modules are inserted into the selected installation track, a magnetic pulling force may act between the magnets and the rotor house in order to slightly deform the rotor house. Thus, after having inserted a complete installation track with magnet modules, the shape of the rotor house at least at the inner surface at the axial end portion may have changed. Thus, the respective radial distances across the entire circumference may have changed such that the next installation track may be different from an installation track which could have been selected based on the previous determination step determining the radial distance.

Thereby, the selection may be improved, and the rotor house shape may slightly be changed towards a more circular or circular cylindrical shape. Thereby, an air gap between the radially inner end of the magnet modules and a radial outer end of a stator may be formed to have a more even size distribution across the entire circumference.

According to an embodiment of the present invention, the method further comprises repeating the steps of determining, selecting and inserting until all installation tracks are filled with magnet modules.

When all the steps of determining, selecting and inserting are repeated in or for every cycle (of the repetition), control of the air gap may still be improved, since the shape of the rotor house may resemble a cylindrical or circular shape in a higher accuracy.

According to an embodiment of the present invention, determining the radial distance comprises: performing an optical measurement using an optical measurement device placed at a device location in order to determine, for the plural circumferential positions, plural auxiliary distances from the device location to the inner surface of the rotor house; deriving the radial distances based on the plural auxiliary distances.

The optical measurement may involve to acquire plural measurement data regarding distances from the device location to the surface measurement location at the inner surface of the rotor house at the radial end. In particular, the optical measurement device may comprise two mirrors which may be rotatable about rotation axes being perpendicular to each other in order to perform a scan across plural surface measurement locations (at the inner surface of the rotor house). The device location not necessarily needs to be arranged at the center point at the rotation axis of the entire machine or the rotor house. Thereby, flexibility may be increased.

According to an embodiment of the present invention, the optical measurement device comprises at least one of: a laser tracker; a laser radar; a LIDAR device. Thereby, conventional available measurement systems may be utilized for implementing the method.

According to an embodiment of the present invention, inserting the magnet modules comprises inserting magnet modules which are predetermined for the selected installation track in an order which is predetermined for the selected installation track, thereby arranging the predetermined magnet modules at predetermined axial and circumferential installation positions.

The predetermined magnet modules and the predetermined order may have been previously determined without relying on the online measurements which are performed during installation of the magnet modules. The predetermined magnet modules and the predetermined order may have been obtained based on still more accurate measurements regarding for example the shape of the rotor house and/or the radial dimensions of the magnet modules.

According to an embodiment of the present invention, the predetermined axial and circumferential installation positions for the magnet modules have previously been determined based on (optical) measurements (relating to a shape) of the inner surface of the rotor house for plural circumferential positions and for plural axial positions (between the axial end portion and the other axial end portion of the rotor house).

The optical measurements may also utilize an optical measurement device like a laser tracker and/or a laser radar and/or a LIDAR device.

The previously determined measurements regarding the shape may comprise more data regarding the shape of the rotor house also across the axial direction which may advantageously be used in order to determine the order in which the magnet modules are to be inserted along the axial direction within the installation tracks. By the predetermined order, effective shape irregularities of the rotor house representing deviations from a circular cylindrical shape may partly be compensated by placing magnet modules having relatively larger height at those axial and circumferential positions of the rotor house where the rotor house has a relatively larger inner radius.

According to an embodiment of the present invention, the predetermined axial and circumferential installation positions for the magnet modules have previously been determined further based on measured magnet module heights.

Also, due to manufacturing tolerances, the heights (or radial extents) of the manufactured magnet modules may vary (e.g. according to a Gauss-distribution). Lower height magnet modules may for example be arranged circumferentially and axially at the rotor house where the rotor house has a relatively smaller radius. Thereby, also the gap between rotor and stator may be improved regarding evenness of gap size.

According to an embodiment of the present invention, the predetermined axial and circumferential installation positions for the magnet modules have previously been determined, while an inner space of the rotor house was empty and/or not occupied by a stator and/or while a stiffening ring, in particular brake disk, was connected to the axial end portion of the rotor house.

When the inner space of the rotor house is empty, the rotor house may be measured in an improved manner across the substantially entire axial extent. Further, when a stiffening ring which is also installed to the rotor house in the completely assembled generator is present while performing the previous measurements, the shape of the rotor house may more accurately resemble the shape of the rotor house in the completely assembled generator.

According to an embodiment of the present invention, inserting the magnet modules at the selected installation track comprises: guiding one magnet module after the other to the axial end portion where the installation track starts; sliding one magnet module after the other within the installation track in a direction away from the axial end portion towards another axial end portion until the predetermined axial position is reached; fixing the magnet modules at the respective predetermined axial installation positions within the selected installation track.

In particular, for performing the method, one or more magnet insertion equipment or devices or machines may be utilized. The method may for example be performed while the rotor house axis is oriented substantially vertically. The axial positioning of each magnet module may be monitored such as to ensure that the respective magnet module in fact is arranged and fixed at the intended predetermined axial as well as circumferential position at the rotor house.

According to an embodiment of the present invention, the (surface measurement location at) the inner surface at the axial end portion of the rotor house is substantially at an edge of the rotor house. The axial end portion may substantially represent an axial end edge of the rotor house.

A measurement device may e.g. be located or arranged or fixed at the fix shaft (e.g. a portion of the stator), e.g. close to or at the rotation axis, such that the measurement location around a whole circumference is within the measurable region of the device.

According to an embodiment of the present invention, the method is performed, while a (inner) stator is connected with rotor via a bearing. Thereby, it may be avoided to install a stator after the magnets have been installed which has been observed to be very difficult due to the very small air gap.

According to an embodiment of the present invention, the method is performed, while a stiffening ring, in particular brake disk, is not connected to the rotor. The stiffening ring or in particular the brake disk may essentially cover the axial ends of the installation tracks in the sense that no magnet modules are insertable when the stiffening ring is already connected to the axial end of the rotor house.

According to an embodiment of the present invention it is provided a method of manufacturing a permanent magnet synchronous electrical machine, the method comprising: providing a rotor house having plural axially extending magnet installation tracks at plural circumferential positions at an inner surface of the rotor house; performing measurements regarding a shape of the inner surface of the rotor house and regarding heights of plural magnet modules, in order to determine installation positions of the plural magnet modules; connecting the rotor house and a stator via a bearing; performing a method of installing the magnet modules at the rotor house according to one of the preceding embodiments; mounting a stiffening ring, in particular brake disk, at the axial end portion of the rotor house.

The electrical machine may be configured as a generator, in particular a generator of a wind turbine.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Embodiments of the present invention are now described with reference to the accompanying drawings. The invention is not restricted to the illustrated or described embodiments.
Fig. 1 schematically illustrates a portion of an electrical machine being manufactured according to an embodiment of the present invention.
Fig. 2 illustrates measurement results during determining radial distances of an inner surface of an axial end portion of the rotor house relative to a center point at a rotation axis.

### Detailed Description

The illustration in the drawings is in schematic form.

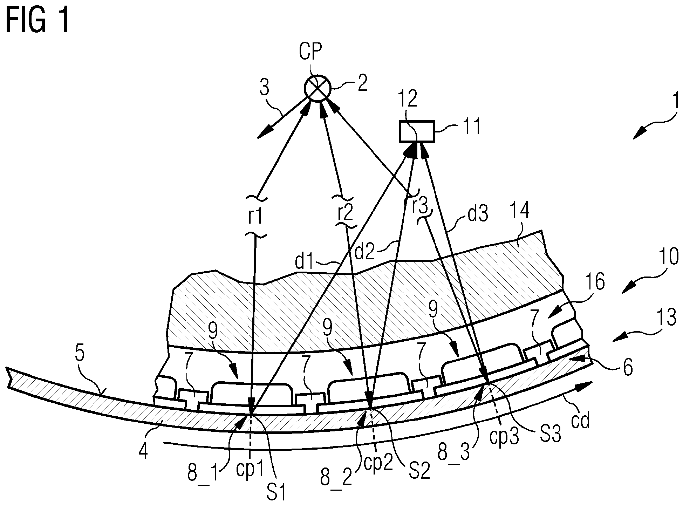

The permanent magnet synchronous electrical machine 1 schematically illustrated in Fig. 1 in a top view viewed along the axial direction 2 being perpendicular to a radial direction 3 and also being perpendicular to a circumferential direction cd comprises during performing a method of installing magnet modules, a rotor house 4 of a rotor 10 having an inner surface 5 representing in the illustrated embodiment a radially inner surface.

In the beginning all installation tracks 8_1, 8_2, 8_3 are empty, no magnet modules 9 are inserted. According to the installation method, radial distances r1, r2, r3 between a center point CP at a rotation axis (running perpendicular to the drawing plane of Fig. 1 through the center point CP) and surface measurement locations s1, s2, s3 at the inner surface 5 at an axial end portion 6 (lying substantially at the drawing plane of Fig. 1) are determined for plural circumferential positions CP1, CP2, CP3. Those radial distances are determined across the entire circumference of the rotor house.

Between respective holding members or rail members 7 which are provided at the inner side of the rotor house 4, respective installation tracks 8_1, 8_2, 8_3, ... are provided. The respective installation tracks 8_1, 8_2, 8_3, ... run along the axial direction 2 and are spaced apart in the circumferential direction cd. The surface measurement locations s1, s2, s3 are positioned within the installation tracks 8_1, 8_2, 8_3, ...

From the plural installation tracks 8_1, 8_2, 8_3, ..., the one to which a greatest radial distance r1, r2, r3, ... is attributed is selected. In other embodiments an installation track from large-radius-installation track(s) (having radial distances greater than a threshold) may be selected.

In the illustrated embodiment, the radius r1 is the greatest distance. Thus, the installation track 8_1 is selected during the installation method. At the selected installation track 8_1, magnet modules 9 are inserted, namely from the axial end portion 6.

In the Fig. 1, the last installed magnet module 9 is visible, but plural other magnet modules have already been inserted at other axial positions towards another axial end of the rotor house 4. Together with the magnet modules which are finally inserted in all installation tracks and including the rotor house 4, a rotor 10 is formed.

In the embodiment illustrated in Fig. 1, the radial distances r1, r2, r3, ... are determined by performing an optical measurement using an optical measurement device 11 which is placed at a device location 12 in order to determine plural auxiliary distances d1, d2, d3 from the device location 12 to the surface measurement locations s1, s2, s3, ... at inner surface of the rotor house 4. By respective processing of the measured distances d1, d2, d3, the respective radial distances r1, r2, r3, ... are derived. In the illustrated embodiment, the measurement device 11 is a LIDAR device.

After the magnet modules 9 have been inserted into the selected installation track 8_1, the step of determining the respective radial distances is repeated using the measurement device 11. The radial distances may then have changed compared to the initially determined radial distances. In the next step of the installation method, again an unfilled installation track is selected to which the then greatest radial distance is attributed. In the illustrated embodiment, the installation track selected next may be the installation track 8_2. Into this installation track 8_2, then also magnet modules 9 will be inserted.

It is noted that the respective magnet modules 9 inserted in the respective installation tracks are predetermined (individual) modules and they are inserted in a predetermined order, as has been explained above. For determining the individual predetermined group of magnet modules and the individual order of magnet modules, also the height h1, h2, h3 of the respective magnet modules 9 may have been previously determined or measured. The height h1, h2, h3, ... may represent the radial extent of the respective magnet modules 9.

In the illustrated embodiment, the inner surface at the axial end portion 6 of the rotor house 4 is substantially at an edge 13 of the rotor house 4.

As can be seen in Fig. 1, while the installation method is performed, an inner stator 14 is connected with the rotor 10 via a not illustrated bearing. The stator 14 comprises not in detail illustrated teeth around which plural stator windings are wound. Thus, the stator 14 is only very schematically illustrated in Fig. 1. In the completely assembled generator or electrical machine 1, a not illustrated stiffening ring or brake disk may then at a last manufacturing step for manufacturing a generator, be connected or coupled to the axial end 6 or the edge 13 of the rotor house.

The air gap between the rotor 10 and the stator 14 is indicated in Fig. 1 and labelled with reference sign 16.

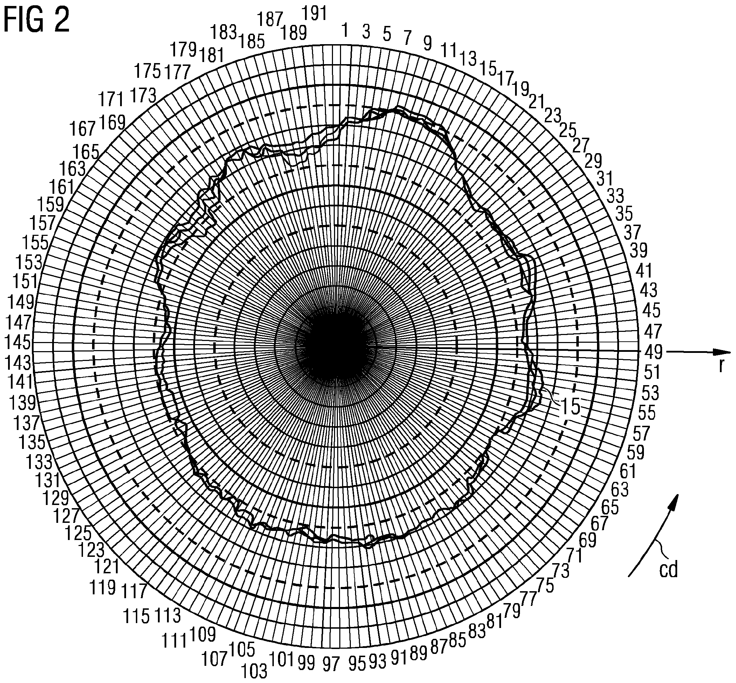

Fig. 2 illustrates measurement results, for example obtained by the optical measurement device 11 illustrated in Fig. 1. The line labelled with reference sign 15 represents radial distances r for plural circumferential positions (along circumferential direction cd) for example between the center point CP illustrated in Fig. 1 and the surface regions s1, s2, s3, ... at an inner surface 5 of a rotor house of the electrical machine 1 illustrated in Fig. 1.

As can be seen from the measurement curve 15, the radial distance changes for different circumferential positions thereby deviating from a circle shape. The numbers at the circumference of the outer circle illustrated in Fig. 2 represent installation track numbers, i.e., the number of the respective installation tracks 8_1, 8_2, 8_3, ... illustrated schematically in Fig. 1. The track having number 11 in Fig. 2 then may correspond to the installation track 8_1 which is selected initially, since to this one it is attributed the largest radial distance r1. After installing the predetermined magnet modules in the predetermined order into this installation track 8_1, the measurements of the radial distances may be repeated and a next unfilled installation track may be selected, for example the installation track having the number 11 corresponding to installation track 8_2 illustrated in Fig. 1.

According to an embodiment of the present invention, a measurement device like a laser radar or laser tracker may detect the shape at the upper side (or axial end portion) of the rotor house. That may indicate that the installation track numbers 11/9-13 (see Fig. 2) are the first installation tracks to be filled with magnet modules. After placing the magnet modules, the shape of the rotor house may change and another installation track may have the largest distance. Here, the next magnet modules may be inserted. The procedure may be repeated or done until all installation tracks are filled.

Embodiments of the present invention may have the following advantages:
Because of live measurement for the insertion of magnets (unsymmetric magnetic pull is a big problem for the shape while magnet insertion), the rotor house shape can be controlled during the complete insertion and mounting process. This may lead to a faster insertion and mounting process and may support best shape and so minimal air gap.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Method of installing magnet modules (9) at a rotor house (4) of a rotor (10) of a permanent magnet synchronous electrical machine (1), the method comprising:
determining a radial distance (r1,r2,r3) between a center point (CP) at a rotation axis (2) and a surface measurement location (s1,s2,s3) at an inner surface (5) at an axial end portion (6) of the rotor house (4) at plural circumferential positions (cp1,cp2,cp3);
selecting, from plural magnet installation tracks (8_1,8_2,8_3) running in an axial direction and being spaced apart in the circumferential direction (cd), an installation track (8_1) having a determined radial distance greater than a threshold, wherein the selected installation track (8_1) is in particular attributive to a greatest radial distance (r1);
inserting magnet modules (9) at the selected installation track (8_1), in particular from the axial end portion (6), along the axial direction (2);
repeating at least the steps of selecting and inserting with respect to unfilled installation tracks (8_2, 8_3), until plural installation tracks are filled with magnet modules (9).

2. Method according to the preceding claim,
wherein the threshold is greater than a mean value of the radial distance, and/or
wherein the threshold is greater than 0.9 of a greatest determined radial distance, and/or
wherein the threshold is defined such that less than 20% or less than 10% or less than 5% or less than 2% of the determined radial distances have a value greater than the threshold; and/or
wherein the selected installation track (8_1) is not attributive to a greatest radial distance (r1).

3. Method according to one of the preceding claims, further comprising:
repeating the steps of determining, selecting and inserting until all installation tracks (8_1,8_2,8_3) are filled with magnet modules (9).

4. Method according to one of the preceding claims, wherein determining the radial distance comprises:
performing an optical measurement using an optical measurement device (11) placed at a device location (12) in order to determine, for the plural circumferential positions, plural auxiliary distances (d1,d2,d3) from the device location (12) to the inner surface (s1,s2,s3) of the rotor house (4);
deriving the radial distances (r1,r2,r3) based on the plural auxiliary distances (d1,d2,d3).

5. Method according to one of the preceding claims, wherein the optical measurement device (11) comprises at least one of:
a laser tracker;
a laser radar;
a LIDAR device.

6. Method according to one of the preceding claims, wherein inserting the magnet modules comprises:
inserting magnet modules (9) which are predetermined for the selected installation track (8_1) in an order which is predetermined for the selected installation track, thereby arranging the predetermined magnet modules at predetermined axial and circumferential installation positions.

7. Method according to one of the preceding claims,
wherein the predetermined axial and circumferential installation positions for the magnet modules have previously been determined based on measurements of the inner surface of the rotor house for plural circumferential positions and for plural axial positions.

8. Method according to one of the preceding claims,
wherein the predetermined axial and circumferential installation positions for the magnet modules (9) have previously been determined further based on measured magnet module heights (h1,h2,h3).

9. Method according to one of the preceding claims,
wherein the predetermined axial and circumferential installation positions for the magnet modules (9) have previously been determined,
while an inner space of the rotor house (4) was empty and/or not occupied by a stator (14) and/or
while a stiffening ring, in particular brake disk, was connected to the axial end portion of the rotor house.

10. Method according to one of the preceding claims, wherein inserting the magnet modules at the selected installation track (8_1) comprises:
guiding one magnet module (9) after the other to the axial end portion (6) where the installation track (8_1) starts;
sliding one magnet module (9) after the other within the installation track (8_1) in a direction away from the axial end portion towards another axial end portion until the predetermined axial position is reached;
fixing the magnet modules (9) at the respective predetermined axial installation positions within the selected installation track.

11. Method according to one of the preceding claims,
wherein the surface measurement location (s1,s2,s3) at the inner surface (5) at the axial end portion of the rotor house is substantially at an edge (13) of the rotor house (4) .

12. Method according to one of the preceding claims,
wherein the method is performed, while a stator (14) is connected with rotor (10) via a bearing.

13. Method according to one of the preceding claims,
wherein the method is performed, while a stiffening ring, in particular brake disk, is not connected to the rotor (10) .

14. Method of manufacturing a permanent magnet synchronous electrical machine (1), the method comprising:
providing a rotor house (1) having plural axially extending magnet installation tracks (8_1,8_2,8_3) at plural circumferential positions at an inner surface (5) of the rotor house (4);
performing measurements regarding a shape of the inner surface (5) of the rotor house (4) and regarding heights (h1,h2,h3) of plural magnet modules (9), in order to determine installation positions of the plural magnet modules;
connecting the rotor house (4) and a stator (14) via a bearing;
performing a method of installing the magnet modules (9) at the rotor house (4) according to one of the preceding claims;
mounting a stiffening ring, in particular brake disk, at the axial end portion of the rotor house.
